(19) Europäisches Patentamt
European Patent Office
Office européen des brevets

(11) **EP 3 507 255 B1**

(12) **FASCICULE DE BREVET EUROPEEN**

(45) Date de publication et mention
de la délivrance du brevet:
**07.06.2023 Bulletin 2023/23**

(21) Numéro de dépôt: **17725329.1**

(22) Date de dépôt: **03.05.2017**

(51) Classification Internationale des Brevets (IPC):
**C03C 25/32** *(2018.01)*    **D04H 1/4209** *(2012.01)*
**D04H 1/587** *(2012.01)*    **D04H 1/64** *(2012.01)*

(52) Classification Coopérative des Brevets (CPC):
**D04H 1/4218; C03C 25/32; C03C 25/321;**
**D04H 1/587; D04H 1/64**

(86) Numéro de dépôt international:
**PCT/FR2017/051059**

(87) Numéro de publication internationale:
**WO 2018/042085 (08.03.2018 Gazette 2018/10)**

(54) **PROCEDE DE FABRICATION DE LAINE MINERALE**

VERFAHREN ZUR HERSTELLUNG VON MINERALWOLLE

PROCESS FOR MANUFACTURING MINERAL WOOL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.09.2016 FR 1658166**

(43) Date de publication de la demande:
**10.07.2019 Bulletin 2019/28**

(73) Titulaire: **SAINT-GOBAIN ISOVER
92400 Courbevoie (FR)**

(72) Inventeurs:
• **KIEFER, Lionel
21 560 Arc-sur-Tille (FR)**
• **AZEVEDO, Joël
91190 Gif sur Yvette (FR)**

(74) Mandataire: **Saint-Gobain Recherche
Département Propriété Industrielle
39 Quai Lucien Lefranc
93300 Aubervilliers (FR)**

(56) Documents cités:
**WO-A1-2012/118939**    **WO-A1-2015/132518**
**WO-A1-2015/181458**

**EP 3 507 255 B1**

**Description**

La présente demande concerne un procédé de fabrication de produits d'isolation thermique à base de laine minérale utilisant des agents anti-poussière de type émulsion huile-dans-eau.

La fabrication de produits d'isolation à base de laine minérale comprend généralement une étape de fabrication des fibres de verre ou de roche par un procédé de centrifugation. Sur leur trajet entre le dispositif de centrifugation et le tapis de collecte des fibres, on pulvérise sur les fibres encore chaudes une composition aqueuse d'encollage, également appelée liant, qui subit ensuite une réaction de thermodurcissement à des températures d'environ 200 °C.

Les résines phénoliques utilisées pendant plusieurs dizaines d'années en tant que liants sont remplacées de plus en plus par des produits issus de sources renouvelables et n'émettant pas, ou très peu, de formaldéhyde, composé considéré comme pouvant nuire à la santé humaine.

Il est ainsi connu, par exemple de US 8197587 et de US 2011/0223364, de lier des fibres minérales avec des compositions aqueuses d'encollage exemptes de formaldéhyde contenant, en tant que réactifs thermoréticulables, des hydrates de carbone et des acides polycarboxyliques.

Par ailleurs il est connu d'incorporer dans une composition aqueuse d'encollage pour fibres minérales un agent de réduction des poussières. L'agent anti-poussière le plus communément utilisé est une huile minérale. Pour garantir un mélange homogène de l'huile minérale avec la composition aqueuse d'encollage et une quantité d'agent anti-poussière appliquée qui est stable au cours du temps, il a été proposé de conditionner l'huile minérale sous forme d'une émulsion huile-dans-eau stabilisée par des agents tensioactifs et/ou des agents épaississants de la phase aqueuse.

WO2015/132518 et WO2015/181458 divulguent un procédé de fabrication de produits isolants à base de laine minérale comprenant l'application sur les fibres minérales d'une composition aqueuse de liant à base de sucres et le durcissement thermique de la composition. Une émulsion huile-dans-eau d'une minérale est ajoutée à la composition aqueuse de liant dans le but de réduire la formation de poussières dans le produit isolant. L'émulsion anti-poussière utilisée (Hydrowax® 88) contient des gouttelettes d'huile minérale ayant un diamètre d'environ 1,8 $\mu$m.

WO2012/118939 divulgue également un procédé de fabrication de produits isolants à base de fibres minérales utilisant une composition aqueuse de liant à base de dextrines (sucres oligomères). Une émulsion anti-poussière (*oil émulsion*) est ajoutée à la composition de liant. Cette demande ne contient pas d'information concernant la taille des gouttelettes d'huile de l'émulsion.

On recherche généralement des émulsions les plus fines et les plus stables possible. La présente invention est basée sur la découverte que la grande stabilité et finesse des émulsions huile-dans-eau utilisées jusqu'ici pourrait limiter l'efficacité des agents anti-poussières.

On suppose en effet en général que la fraction d'huile minérale efficace pour retenir les poussières est celle étalée à la surface de la couche de liant (i.e. à l'interface liant/air) durci à la fin de l'étape de cuisson. L'huile minérale doit donc se séparer - pendant l'étape d'application sur les fibres ou immédiatement après - des autres ingrédients de la composition d'encollage pour former une couche superficielle enrobant la couche de liant. En effet, des gouttelettes d'huile minérale piégées dans le liant durci seraient inefficaces pour retenir les particules de poussière.

Le problème technique à la base de la présente invention résulte donc d'une double contrainte, à savoir

- de la nécessité de disposer d'une émulsion huile-dans-eau d'agent anti-poussières stable jusqu'au moment de l'application de la composition d'encollage, et
- de la nécessité, au moment de la pulvérisation de la composition d'encollage, de déstabiliser rapidement l'émulsion pour former une couche d'huile à la surface de la couche de liant.

La Demanderesse, dans le cadre de ses recherches visant à optimiser les émulsions anti-poussières pour laine minérale liée par des liants bio-sourcés, a découvert qu'un paramètre important à prendre en considération était la taille des gouttelettes d'huile. Les émulsions contenant des gouttelettes relativement grandes, ayant une taille de l'ordre de plusieurs microns à quelques dizaines de microns, étaient plus efficaces que des émulsions plus fines avec des gouttelettes de l'ordre du micron ou subm icroniques.

Sans vouloir être liée par une quelconque théorie, les inventeurs pensent que cet effet est dû à une déstabilisation accélérée de l'émulsion. Dans le procédé de fabrication de laine de verre, les aspects cinétiques sont en effet importants : l'émulsion anti-poussière, parfaitement stable au stockage, est injectée dans la conduite qui alimente la couronne d'encollage avec la composition aqueuse d'encollage. Quelques secondes plus tard, le mélange composition d'encollage/émulsion anti-poussières est dispersé dans l'air par les buses de pulvérisation et vient au contact des fibres minérales encore chaudes. La viscosité de la composition d'encollage appliquée augmente très vite suite à l'évaporation de la phase aqueuse et le liant est définitivement durci par chauffage dans l'étuve quelques dizaines de secondes plus tard. C'est donc dans les toutes premières secondes après l'application sur les fibres que les gouttelettes d'huile minérale anti-poussières doivent coalescer et former un film à la surface de la couche de liant. Si les gouttelettes d'huile sont trop petites la déstabilisation de l'émulsion est trop lente et une fraction trop importante d'huile risque de rester piégée sous forme de fines gouttelettes dans la masse du liant durci.

Les émulsions huile-dans-eau utilisées dans la présente invention sont donc plus efficaces que celles de l'état de la technique parce qu'elles contiennent des gouttelettes d'huile plus grosses qui coalescent plus facilement et migrent plus rapidement vers l'interface liant/air. La rupture facilitée de l'émulsion accélère la migration de l'huile vers l'interface liant/air et réduit, voire supprime, la quantité d'huile piégée dans la masse du liant durci. Il en résulte une augmentation de l'efficacité anti-poussières.

La présente invention a donc pour objet un procédé de fabrication de produits isolants à base de laine minérale tel que défini à la revendication 1 On entend par « agent de réticulation de glucides » dans la présente demande un composé capable de réagir, éventuellement en présence d'un catalyseur, avec les glucides et de former avec ces derniers un réseau tridimensionnel au moins partiellement insoluble.

Le procédé selon l'invention comprend donc les quatre étapes suivantes :

(1) mélange de la composition d'encollage avec l'émulsion huile-dans-eau, appelée ci-après émulsion anti-poussières,

(2) application du mélange obtenu sur les fibres de laine minérale, de préférence par pulvérisation (dispersion de la composition d'encollage dans l'air)

(3) évaporation de la phase volatile du mélange de la composition d'encollage et de l'émulsion anti-poussières, et

(4) le durcissement thermique de la fraction non volatile à haute température, généralement au moins égale à 200 °C.

L'émulsion huile-dans-eau utilisée dans la présente invention est de préférence une émulsion stable. Cela signifie qu'elle peut être conservée en l'absence d'agitation pendant plusieurs semaines à une température comprise entre 20 °C et 50 °C sans que le diamètre moyen des gouttelettes d'huile qu'elle contient augmente de manière significative.

La teneur en huile des émulsions anti-poussière de la présente invention est comprise entre 30 et 70 % en poids, de préférence entre 40 et 65 % en poids et en particulier entre 45 et 60 % en poids.

Les émulsions anti-poussières utilisées dans la présente invention contiennent, en tant qu'agent anti-poussière, de l'huile minérale également appelée paraffine liquide. Elle présente avantageusement une viscosité cinématique à 20 °C comprise entre 100 et 6000 mm$^2$/s.

La Demanderesse a obtenu des résultats particulièrement intéressants avec une huile minérale dite « de haute viscosité » présentant une viscosité cinématique à 20 °C (ISO 3104) comprise entre 1000 et 5000 mm$^2$/s. Cette gamme de viscosité cinématique de l'huile minérale est par conséquent particulièrement préférée.

Des huiles minérales sont disponibles sur le marché par exemple sous les dénominations Novadex C304 ou Catenex S579 (huile haute viscosité) ou Novadex B110 (huile basse viscosité).

L'émulsion anti-poussière huile-dans-eau est stabilisée par une combinaison de deux composants, à savoir :

- un agent tensioactif non-ionique ou un mélange d'agents tensioactifs non-ioniques, et
- un polymère épaississant de la phase aqueuse.

On pourra en principe utiliser tous les agents tensioactifs non-ioniques connus pour leurs propriétés émulsionnantes. Ils ont généralement une HLB (de l'anglais *Hydrophilic Lipophilic Balance)* supérieure à 10.

On peut citer à titre d'exemples d'agents tensioactifs non-ioniques utilisables pour la présente invention

- les esters d'acides gras, notamment les dérivés polyalcoxylés d'acides gras,
- les éthers d'alcools gras, notamment les dérivés polyalcoxylés d'alcools gras,
- les dérivés polyalcoxylés de polyols tels que les dérivés polyalcoxylés de glycérol ou de triméthylolpropane,
- les copolymères séquencés de poly(oxyde d'éthylène) et de poly(oxyde de propylène), en particulier les poloxamères qui sont des copolymères triséquencés comportant un bloc central de poly(oxyde de propylène) et deux blocs de poly(oxyde d'éthylène)

La quantité totale d'agent(s) tensioactif(s) non-ionique(s) est comprise entre 0,5 et 5 parties en poids, de préférence entre 1,2 à 3 parties en poids et en particulier entre 1,5 et 2,8 parties en poids pour 100 parties en poids d'huile minérale.

Les polymères épaississants de la phase aqueuse sont connus. Il s'agit de polyosides solubles dans l'eau à température ambiante. On peut citer à titre d'exemples de tels polyosides les dérivés de la cellulose, en particulier les éthers de cellulose hydrophiles tels que les hydroxyalkylcelluloses et carboxyalkylcelluloses, les maltodextrines, les gommes naturelles telles que la gomme de xanthane, la gomme de guar et les scléroglucanes. Il est bien entendu possible d'utiliser une combinaison de ces épaississants.

Lorsqu'on l'exprime par rapport à la quantité d'huile minérale, la quantité de polyoside hydrosoluble est comprise entre 0,1 et 2 parties en poids, de préférence entre 0,5 et 1 partie en poids pour 100 parties en poids d'huile minérale.

Pour préparer l'émulsion huile-dans-eau de la présente invention, on prépare avantageusement d'abord une solution aqueuse de l'agent tensioactif, ou des agents tensioactifs, et du polymère épaississant de la phase aqueuse. La dissolution de ces deux composants hydrosolubles peut nécessiter un chauffage modéré de la phase aqueuse, par exemple à une température comprise entre 30 et 80 °C, et une durée d'agitation assez longue comprise entre environ 1 heure et 20 heures. Il est toutefois préférable qu'après retour à la température ambiante, les deux composants restent solubles dans l'eau.

On ajoute ensuite à la phase aqueuse contenant l'agent tensioactif et le polyoside hydrosoluble à l'état dissous l'huile minérale, puis on soumet le mélange à des forces de cisaillement ou à des ultrasons jusqu'à obtention d'une émulsion stable.

La Demanderesse a utilisé pour l'obtention des émulsions huile-dans-eau ayant des gouttelettes d'une taille moyenne supérieure à 5 $\mu$m un disperseur Ultra-Turrax IKA T50 avec un outil de dispersion S50N - G45G, le disperseur fonctionnant à la vitesse maximale (10000 tr/min) pendant environ 1 à 5 min.

La taille des gouttelettes peut être ajustée en modifiant soit la force de cisaillement utilisée (c'est-à-dire la vitesse de cisaillement du disperseur) soit la viscosité de l'huile minérale utilisé :

- pour une huile minérale donnée, plus la force de cisaillement est importante, plus les gouttelettes seront petites ; lorsqu'on souhaite agrandir leur diamètre il faut diminuer la vitesse de rotation de l'outil de dispersion,
- pour une force de cisaillement donnée, plus l'huile sera visqueuse, plus le diamètre des gouttelettes sera important ; lorsqu'on souhaite diminuer le diamètre il convient donc de choisir une huile moins visqueuse.

La quantité en tensioactifs non-ioniques et/ou agent épaississant a peu d'influence sur le diamètre des gouttelettes mais influe sur la stabilité des émulsions obtenues.

Le diamètre moyen en volume des gouttelettes d'huile de l'émulsion obtenue est ensuite déterminé par granulométrie laser à l'aide d'un granulomètre par diffraction laser (Metasizer 2000 ou Metasizer 3000) à une température de 20 °C. Pour cela l'émulsion doit être diluée dans un grand volume d'eau (dilution d'environ 1/1000 à 1/100000). La valeur du diamètre moyen est cependant indépendante de la dilution effectuée.

Comme déjà expliqué en introduction la Demanderesse a constaté que, pour une quantité d'huile appliquée donnée, les émulsions huile-dans-eau de la présente invention présentant une distribution granulométrique avec un diamètre moyen supérieur à 5 $\mu$m avaient une meilleure efficacité anti-poussière que des émulsions de l'état de la technique contenant des gouttelettes de plus petite taille.

Ce diamètre moyen est compris entre 5,1 et 150 $\mu$m, de préférence entre 6,0 et 100 $\mu$m, plus préférentiellement entre 6,5 et 60 $\mu$m, plus préférentiellement encore entre 7 et 40 $\mu$m, de préférence entre 8 et 35 $\mu$m, en particulier entre 10 et 30 $\mu$m.

La composition d'encollage à base de glucides et d'agent de réticulation, de préférence de polyacides carboxyliques, utilisée dans la présente invention est connue et décrite par exemple dans US 8197587, WO2010/029266, WO2013/014399, WO2015/181458, WO2012/168619, WO2012/168621, WO2012/072938.

Dans la présente demande le terme « glucides » a un sens plus large qu'usuellement, car il englobe non seulement les glucides au sens stricte, c'est-à-dire les sucres réducteurs ou hydrates de carbone de formule $C_n(H_2O)_p$ présentant au moins un groupe aldéhyde ou cétone (groupe réducteur), mais également les produits d'hydrogénation de ces hydrates de carbone où le groupe aldéhyde ou cétone a été réduit en alcool. Ce terme englobe également les sucres non-réducteurs constitués de plusieurs motifs glucidiques dont les carbones porteurs de l'hydroxyle hémi-acétalique sont impliqués dans les liaisons osidiques reliant les motifs entre eux.

Le composant glucidique (composant (a)) de la composition d'encollage selon l'invention peut être constitué uniquement de sucres hydrogénés et être exempt de sucres réducteurs ou non réducteurs. Ce mode de réalisation est intéressant car il conduit à des produits isolants particulièrement peu colorés.

Les produits isolants à base de laine minérale obtenus avec une composition d'encollage présentant une certaine teneur en sucres réducteurs sont relativement plus colorés, mais peuvent présenter un réel intérêt économique lié au faible coût des sucres réducteurs ou de mélanges de sucres incomplètement hydrogénés.

Par « sucre hydrogéné » on entend dans la présente invention l'ensemble des produits résultant de la réduction d'un saccharide choisi parmi les monosaccharides, disaccharides, oligosaccharides et polysaccharides et des mélanges de ces produits.

Le sucre hydrogéné est de préférence un produit d'hydrogénation d'un hydrolysat d'amidon.

Les hydrolysats d'amidon sont des produits obtenus par hydrolyse enzymatique et/ou acide d'amidon. Le degré d'hydrolyse est généralement caractérisé par l'équivalent dextrose (DE), défini par la relation suivante :

$$DE = 100 \times \left( \frac{\text{nombre de liaisons glycosidiques rompues}}{\text{nombre de liaisons glycosidiques dans l'amidon initial}} \right)$$

Les hydrolysats d'amidon préférés ont, avant l'étape d'hydrogénation, un DE compris entre 5 et 99, et avantageusement entre 10 et 80.

L'hydrogénation du saccharide peut être effectuée par les méthodes connues opérant dans des conditions de pression d'hydrogène et de température élevées, en présence d'un catalyseur choisi parmi les éléments des groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney. L'hydrogénation transforme le sucre ou le mélange de sucres (hydrolysat d'amidon) en polyols ou alcools de sucre.

A titre d'exemples de sucres hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon.

On utilisera de préférence les produits d'hydrogénation d'hydrolysats d'amidon.

De préférence, le sucre hydrogéné ou le mélange de sucres hydrogénés est constitué majoritairement, c'est-à-dire à plus de 50 % en poids, de maltitol (produit d'hydrogénation du maltose, dimère de glucose résultant de l'hydrolyse enzymatique de l'amidon).

Le composant glucidique (composant (a)) peut être constitué uniquement de sucres réducteurs. Toutefois pour les raisons indiquées ci-avant, il contient de préférence une fraction significative de sucres hydrogénés. La proportion de sucres hydrogénés dans le glucide est avantageusement comprise entre 25 et 100 % en poids, et le composant (a) contient alors jusqu'à 75 % en poids d'un ou plusieurs sucres réducteurs ou non-réducteurs, en plus du ou des sucres hydrogénés.

La teneur en sucres hydrogénés du glucide (composant (a)) est de préférence au moins égale à 30 % en poids, en particulier au moins égale à 50 % en poids, et idéalement au moins égale à 70 % en poids.

Les sucres réducteurs englobent les oses (monosaccharides) et osides (disaccharides, oligosaccharides et polysaccharides).

A titre d'exemples de monosaccharides, on peut citer ceux comportant de 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que le glucose, le mannose et le galactose.

Le lactose ou le maltose sont des exemples de disaccharides utilisables en tant que sucre réducteur.

Les polysaccharides utilisables pour la présente invention ont de préférence une masse molaire moyenne en poids inférieure à 100.000, de préférence inférieure à 50.000, avantageusement inférieure à 10.000.

De préférence, le polysaccharide renferme au moins un motif choisi parmi les aldoses précités, avantageusement le glucose. Sont particulièrement préférés les polysaccharides réducteurs qui sont constitués majoritairement (à plus de 50 % en poids) de motifs de glucose.

Le sucre réducteur peut notamment être un mélange de monosaccharides, d'oligosaccharides et de polysaccharides, notamment une dextrine.

Les dextrines sont des composés répondant à la formule générale $(C_6H_{10}O_5)_n$. Elles sont obtenues par hydrolyse partielle d'amidon. Leur équivalent dextrose (DE) est avantageusement compris entre 5 et 99, de préférence entre 10 et 80.

Le sucre non réducteur est de préférence un oligoholoside non réducteur renfermant au plus dix motifs glucidiques.

A titre d'exemples de tels sucres non réducteurs, on peut citer les diholosides tels que le tréhalose, les isotréhaloses, le saccharose et les isosaccharoses (« isosucroses » en anglais), les triholosides tels que le mélézitose, le gentianose, le raffinose, l'erlose et l'umbelliférose, les tétraholosides tels que le stachyose, et les pentaholosides tels que le verbascose.

On préfère le saccharose et le tréhalose, et mieux encore le saccharose.

Le composant (a), à savoir le glucide constitué de sucres hydrogénés et/ou de sucres réducteurs et/ou non-réducteurs, représente avantageusement de 30 à 70 % en poids, de préférence de 40 à 60 % en poids de matières sèches de la composition d'encollage. Ces valeurs s'entendent avant l'ajout de l'émulsion anti-poussières.

L'agent de réticulation utilisé dans la présente invention est choisi de préférence parmi les acides polycarboxyliques, les sels et anhydrides d'acides polycarboxyliques, les sels métalliques d'acides minéraux et les sels d'amines et d'ammonium d'acides minéraux

Les acides minéraux sont par exemple l'acide sulfurique, l'acide phosphorique, l'acide nitrique et l'acide chlorhydrique. Les sels métalliques peuvent être les sels de métaux alcalins, alcalino-terreux et de transition.

Les acides minéraux et leur sels utilisables en tant qu'agent de réticulation dans la présente invention sont décrits par exemple dans les demandes WO2012/168619, WO2012/168621 et WO2012/072938.

Dans un mode de réalisation préféré, l'agent de réticulation comprend un acide polycarboxylique ou est un acide polycarboxylique. L'acide polycarboxylique peut être un acide polymère (c'est-à-dire obtenu par polymérisation de monomères carboxylés) ou un acide monomère.

Pour limiter la viscosité de la composition d'encollage, cet acide polycarboxylique présente avantageusement une masse molaire moyenne en nombre inférieure ou égale à 50000, de préférence inférieure ou égale à 10000 et avantageusement inférieure ou égale à 5000.

On peut citer à titre d'exemples d'acides polycarboxyliques polymères, les homopolymères et copolymères obtenus à partir de monomères portant au moins un groupe acide carboxylique tel que l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide $\alpha,\beta$-méthylèneglutarique et les monoesters d'acide dicarboxylique insaturés, tels que les maléates et les fumarates d'alkyle en $C_1$-$C_{10}$. Les copolymères peuvent contenir en outre un ou plusieurs monomères vinyliques ou acryliques tels que l'acétate de vinyle, le styrène substitué ou non par des groupements alkyle, hydroxyle ou sulfonyle, ou par un atome d'halogène, le (méth)acrylonitrile, le (méth)acrylamide, les (méth)acrylates alkyle en $C_1$-$C_{10}$, notamment le (méth)acrylate de méthyle, le (méth)acrylate d'éthyle, le (méth)acrylate de n-butyle et le (méth)acrylate d'isobutyle.

Dans un mode de réalisation particulièrement préféré, lecomposant (b) est ou comprend un acide polycarboxylique monomère. On entend par acide polycarboxylique monomère un acide polycarboxylique qui ne résulte pas de la polymérisation de monomères carboxylés. Un polyacide carboxylique monomère ne comporte donc pas un enchaînement de motifs récurrents.

Il peut s'agir d'un acide dicarboxylique, tricarboxylique ou tetracarboxylique.

Les acides dicarboxyliques englobent, par exemple, l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique.

Les acides tricarboxyliques englobent, par exemple, l'acide citrique, l'acide tricarballylique, l'acide 1,2,4-butanetricarboxylique, l'acide aconitique, l'acide hémimellitique, l'acide triméllitique et l'acide trimésique ;

On peut citer comme acide tétracarboxylique, par exemple l'acide 1,2,3,4-butanetétracarboxylique et l'acide pyroméllitique.

On utilisera de préférence l'acide citrique.

Le composant (b) représente avantageusement de 30 à 70 % en poids, de préférence de 40 à 60 % en poids de matières sèches de la composition d'encollage de la présente invention. Ces valeurs s'entendent avant l'ajout de l'émulsion anti-poussières.

Le rapport en poids du composant (a) au composant (b) est de préférence compris entre 70/30 et 30/70, en particulier entre 60/40 et 40/60.

La composition d'encollage comprend en outre de préférence un catalyseur d'estérification qui peut être choisi par exemple parmi les bases et les acides de Lewis, tels que les argiles, la silice colloïdale ou non colloïdale, les oxydes métalliques, les sulfates d'urée, les chlorures d'urée et les catalyseurs à base de silicates.

Le catalyseur peut également être un composé contenant du phosphore, par exemple un hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium ou un mélange de ces composés.

La quantité de catalyseur introduite dans la composition d'encollage représente généralement au plus 20 % en poids, avantageusement de 1 à 10 % en poids, rapporté au poids total des composants (a) et (b).

La composition d'encollage conforme à l'invention peut comprendre en outre les additifs conventionnels ci-après dans les proportions suivantes calculées sur la base de 100 parts en poids de composant (a) + (b) :

de 0 à 2 parts de silane, en particulier un aminosilane,

de 0,1 à 3 parts en poids de polyorganosiloxane, de préférence polydiméthylsiloxane (PDMS),

de 0 à 20 parts d'un polyol différent des sucres hydrogénés,

de 0 à 30 parts, de préférence 0 à 20 parts, d'urée,

de 0 à 30 parts d'une charge d'extension (*extender*) choisie parmi les dérivés de la lignine tels que le lignosulfonate d'ammonium (LSA) ou le lignosulfonate de sodium, et les protéines animales ou végétales.

Le rôle de ces additifs est connu et brièvement rappelé :
Le silane est un agent de couplage capable de réagir à la fois avec la surface des fibres et avec les composants du liant.

Le polyorganosiloxane est de préférence un polydiorganosiloxane portant des fonctions capables de réagir avec les constituants (a) ou (b) de la composition d'encollage et/ou avec les groupes silanol de la surface du verre. Ces fonctions sont par exemple les fonctions silanol, carboxyle, anhydride, amine, epoxy ou vinyle, en particulier des fonctions silanol et carboxyle.

Le rôle de ce polyorganosiloxane est de réduire le caractère hydrophile du liant durci et du produit final obtenu.

La silicone réactive est de préférence liquide à température ambiante. Sa masse molaire moyenne est généralement inférieure ou égale à 50 000, de préférence inférieure ou égale à 10 000.

De préférence, la silicone réactive comprend une fonction réactive, avantageusement une fonction silanol, à chacune de ses extrémités de chaîne.

La fonction réactive de la silicone réactive peut être bloquée par un groupement protecteur qui libère ladite fonction réactive sous l'effet de la chaleur. La proportion de silicone réactive dans la composition d'encollage varie généralement de 0,1 à 3 parts, de préférence de 0,3 à 2,5 parts, avantageusement de 0,5 à 2,0 parts et mieux encore de 0,7 à 1,8 parts en poids, pour 100 parts en poids de la somme des composants (a) et (b).

La préparation de la composition d'encollage est effectuée par simple mélange des constituants précités avec de l'eau.

Dans le procédé de la présente invention l'additif anti-poussière, c'est-à-dire l'émulsion huile-dans-eau, est ajoutée à la composition d'encollage de préférence immédiatement avant l'application de celle-ci sur les fibres de laine minérale. L'application de la composition d'encollage sur les fibres minérales se fait de préférence au moyen d'une couronne de pulvérisation comportant une pluralité de buses.

Dans un mode de réalisation, l'émulsion huile-dans-eau est ajoutée dans le réservoir de la composition d'encollage et le mélange obtenu peut être brassé par un système de mélange classique jusqu'à une répartition homogène des gouttelettes d'huile dans la composition à pulvériser.

Dans un autre mode de réalisation, l'émulsion stable huile-dans-eau est introduite dans la composition d'encollage par injection d'un flux d'émulsion huile-dans-eau dans le flux de composition d'encollage alimentant la couronne de pulvérisation. Le brassage des deux compositions liquides se fait alors grâce à l'écoulement turbulent du mélange dans les conduites de l'installation.

Dans ce deuxième mode de réalisation, l'introduction de l'émulsion huile-dans-eau dans la composition d'encollage se fera au plus quelques dizaines de secondes avant la pulvérisation du mélange par les buses de la couronne de pulvérisation.

La dilution que subit l'émulsion anti-poussières lorsqu'elle est introduite dans la composition d'encollage est comprise entre environ 1/10 et 1/500, en particulier entre 1/20 et 1/200.

La composition d'encollage contenant l'émulsion anti-poussière est de préférence appliquée sur les fibres minérales en une quantité telle que la teneur finale en liant organique, après évaporation de la phase solvant et durcissement dans l'étuve, soit comprise entre environ 3 % et 7 %, en particulier entre 3,5 % et 6,5 % et de manière particulièrement préférée entre 4 et 6 % en poids, rapporté au poids des fibres minérales.

La quantité d'huile minérale appliquée sur les fibres de laine minérale et présente dans le produit final, est comprise entre 0,1 et 2,0 %, de préférence entre 0,2 et 1,0 %, en particulier entre 0,3 et 0,8 %, rapporté au poids des fibres minérales.

Exemple

1) Préparation de la composition d'encollage (liant de base)

On prépare des compositions d'encollage comprenant 48 parties en poids de Maltilite® 5575 (sirop de maltitol), 52 parties en poids d'acide citrique et 5 parties en poids d'hypophosphite de sodium. On prépare la composition d'encollage en introduisant, dans un récipient, de l'eau (environ 80 % de la composition finale), le sucre hydrogéné (sirop de maltitol), l'acide citrique et l'hypophosphite de sodium (catalyseur).

2) Préparation d'une émulsion huile-dans-eau anti-poussières stable selon l'invention

On dissout dans 10 litres d'eau 150 g de Pluronic F-127 (copolymère triséquencé d'oxyde de propylène et d'oxyde d'éthylène) et 65 g de Rhodopol 23 (gomme de xanthane) en chauffant à une température d'environ 50 °C et en agitant pendant environ 20 heures jusqu'à dissolution totale du tensioactif et de l'épaississant. On ajoute ensuite à 4,8 kg de cette solution aqueuse 5,5 litres d'une huile minérale présentant une viscosité cinématique à 20 °C de 2300 $mm^2$/s (ISO 3104), une viscosité cinématique à 40 °C de 500 $mm^2$/s (ISO 3104) et un point éclair de 300 °C (ISO 2592). On introduit ensuite le disperseur Ultra-Turrax® T50 muni d'un outil de dispersion S50N-G45G dans le mélange, puis on fait fonctionner l'Ultra-Turrax à une vitesse de 10000 tr/min pendant 2 min.

Le diamètre moyen des gouttelettes d'huile de l'émulsion obtenue est de 16 $\mu$m. Ce diamètre ne varie pas après stockage de l'émulsion pendant 1 semaine à température ambiante.

3) Emulsion huile-dans-eau comparative

On utilise en tant qu'émulsion anti-poussières comparative l'émulsion HydroWax® 88 commercialisée par la société SASOL. Cette émulsion contient environ 52 - 53 % en poids d'une huile minérale à haute viscosité présentant une viscosité cinématique à 40 °C de 500 $mm^2$/s et un point éclair supérieur à 280 °C. D'après les informations fournies par le fabricant, cette émulsion est stabilisée par des agents tensioactifs anioniques. Le diamètre moyen des gouttelettes d'huile, déterminé par granulométrie par diffraction de laser sur un appareil Metasizer 2000 est de 1,8 $\mu$m.

4) Fabrication du matelas de laine minérale

On fabrique de la laine de verre par la technique de la centrifugation interne dans laquelle la composition de verre fondu est transformée en fibres au moyen d'un outil dénommé « assiette de centrifugation », comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La composition d'encollage est mélangée avec chacune des émulsions huile-dans-eau anti-poussières (selon l'invention et comparative) au moyen d'un mélangeur statique.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur circule ensuite dans une étuve maintenue à 270°C où les constituants de l'encollage polymérisent pour former un liant. Le produit isolant obtenu présente une densité nominale égale à 17,5 kg/$m^3$, une épaisseur nominale d'environ 75 mm et une perte au feu de l'ordre de 5 %.

5) Evaluation de l'efficacité anti-poussières

L'efficacité anti-poussières des émulsions huile-dans-eau selon l'invention est évaluée à l'aide d'un dispositif interne. Un échantillon de 20 cm x 30 cm de laine de verre est fixé dans un cadre de manière à ce qu'au moins une de ses faces principales soit libre. Une plaque perforée ayant des dimensions légèrement inférieures à celle de l'échantillon, fixée sur un bras articulé, vient frapper la face libre de l'échantillon. Un dispositif optique compte le nombre de particules libérées.

6) Résultats

Tableau 1 - Nombre de particules de poussière détectées

| Quantité d'huile minérale rapportée aux fibres (%) | Hydrowax® 88 comparatif | Emulsion selon l'invention | Réduction du nombre de particules de poussière |
|---|---|---|---|
| 0,2 | 380 | 140 | 63 % |
| 0,4 | 227* | 100 | 56 % |

(suite)

| Quantité d'huile minérale rapportée aux fibres (%) | Hydrowax® 88 comparatif | Emulsion selon l'invention | Réduction du nombre de particules de poussière |
|---|---|---|---|
| 0,7 | 190 | 110 | 42 % |
| *Valeur moyenne calculée à partir de trois productions distinctes, effectuées au cours d'une même journée (290 (début de journée) - 180 (milieu de journée) - 210 (fin de journée) ; toutes les autres valeurs correspondent à une seule production de laine minérale | | | |

Le tableau 1 ci-dessus montre le nombre de particules de poussière détectées pour des échantillons de laine de verre liés avec une même composition d'encollage à base de maltitol et d'acide citrique et contenant des quantités identiques d'huile minérale à haute viscosité.

Ces résultats montrent que, pour une *même* quantité d'huile (respectivement égale à 0,2 %, 0,4 % et 0,7 % en poids rapporté au poids des fibres minérales), l'émulsion selon l'invention contenant des gouttelettes ayant un diamètre moyen de 16 $\mu$m réduit plus efficacement le nombre de particules qu'une composition selon l'état de la technique (HydroWax® 88) contenant des particules ayant un diamètre moyen de 1,8 $\mu$m.

Tableau 2 - Nombre de particules détectées (en présence de PDMS)

| Quantité d'huile silicone réactive rapportée aux fibres (%) | Hydrowax® 88 comparatif | Emulsion selon l'invention | Réduction |
|---|---|---|---|
| 0,045 | 520 | 220 | 58 % |
| 0,1 | 450 | 190 | 58 % |

Les résultats du tableau 2 ci-dessus ont été obtenus dans les conditions identiques à celles de la ligne 2 du tableau 1 (0,4 % d'huile minérale ajoutée sous forme d'émulsion huile-dans-eau), avec la seule différence qu'une huile silicone réactive (SILRES® BS 5137, commercialisée par la société Wacker) a été ajoutée à la composition d'encollage. Cette silicone rend le liant et le produit final plus hydrophobe.

On constate que la quantité de poussière est globalement plus importante qu'en l'absence d'huile siliconée. La réduction du nombre de poussières par l'émulsion en comparaison de l'huile selon l'état de la technique est toutefois aussi spectaculaire qu'en l'absence de silicone.

## Revendications

**1.** Procédé de fabrication de produits isolants à base de laine minérale, comprenant

- l'application, sur des fibres de laine minérale, d'une composition d'encollage contenant

(a) au moins un glucide choisi parmi les sucres réducteurs, les sucres non réducteurs, les sucres hydrogénés et un mélange de ceux-ci,
(b) au moins un agent de réticulation du ou des glucides,

- l'évaporation de la phase solvant de la composition d'encollage et
- le durcissement thermique de la fraction non volatile de la composition, ledit procédé étant **caractérisé par le fait que** l'on ajoute à la composition d'encollage, de préférence immédiatement avant l'application de celle-ci sur les fibres de laine minérale, une émulsion huile-dans-eau comprenant de l'eau, de 30 à 70 % en poids d'une huile minérale, de 0,5 à 5,0 parties en poids pour 100 parties en poids d'huile minérale d'au moins un agent tensioactif non-ionique et de 0,1 à 2,0 parties en poids pour 100 parties en poids d'huile minérale d'un polyoside hydrosoluble, le diamètre moyen des gouttelettes d'huile de l'émulsion huile-dans-l'eau, déterminé par granulométrie par diffraction laser, étant compris entre 5,1 $\mu$m et 150 $\mu$m et la quantité d'huile minérale appliquée sur les fibres de laine minérale étant comprise entre 0,1 et 2,0 % rapporté au poids des fibres minérales.

**2.** Procédé selon la revendication 1, **caractérisé par le fait que** l'agent de réticulation est choisi parmi les acides polycarboxyliques, les sels et anhydrides d'acides polycarboxyliques, les sels métalliques d'acides minéraux et les sels d'amines et d'ammonium d'acides minéraux.

3. Procédé selon la revendication 2, **caractérisé par le fait que** l'agent de réticulation est choisi parmi les acides polycarboxyliques, de préférence parmi les acides polycarboxyliques monomères.

4. Procédé selon l'une quelconque des revendications précédentes, **caractérisé par le fait que** la proportion de sucres hydrogénés dans le glucide est comprise entre 25 % et 100 % en poids, de préférence d'au moins 30 % en poids, en particulier d'au moins 50 % en poids, et encore plus préférentiellement d'au moins 70 % en poids de sucres hydrogénés

5. Procédé selon l'une quelconque des revendications précédentes, **caractérisé par le fait que** la composition d'encollage comprend en outre de 0,1 à 3 parts en poids de polyorganosiloxane, de préférence de polydiméthylsiloxane (PDMS), rapporté à 100 parts en poids de constituants (a) + (b).

6. Procédé selon la revendication 5, **caractérisé par le fait que** le polyorganosiloxane porte des fonctions capables de réagir avec les constituants (a) ou (b) de la composition d'encollage.

7. Procédé selon l'une quelconque des revendications précédentes, **caractérisé par le fait que** l'huile minérale a une viscosité cinématique à 20 °C comprise entre 100 et 6000 mm$^2$/s, de préférence entre 1000 et 5000 mm$^2$/s.

8. Procédé selon l'une quelconque des revendications précédentes **caractérisé par le fait que** le diamètre moyen des gouttelettes d'huile minérale est compris entre 6,0 $\mu$m et 100 $\mu$m, plus préférentiellement entre 6,5 et 60 $\mu$m, encore plus préférentiellement entre 7 et 40 $\mu$m, en particulier entre 8 et 35 $\mu$m, et idéalement 10 et 30 $\mu$m.

9. Procédé selon l'une quelconque des revendications précédentes, **caractérisé par le fait que** l'émulsion huile-dans-eau comprend de 0,5 à 1 parties en poids de polyoside hydrosoluble pour 100 parties en poids d'huile minérale.

10. Procédé selon l'une quelconque des revendications précédentes, **caractérisé par le fait que** l'émulsion huile-dans-eau comprend de 1,2 à 3 parties en poids d'agent tensioactif non-ionique pour 100 parties en poids d'huile minérale.

11. Procédé selon l'une quelconque des revendications précédentes, **caractérisé par le fait que** l'application de la composition d'encollage sur les fibres minérales se fait au moyen d'une couronne de pulvérisation comportant une pluralité de buses, et **par le fait que** l'émulsion huile-dans-eau est introduite dans la composition d'encollage par injection d'un flux d'émulsion huile-dans-eau dans le flux de composition d'encollage alimentant la couronne de pulvérisation.

12. Procédé selon l'une quelconque des revendications 1 à 10, **caractérisé par le fait que** l'émulsion huile-dans-eau est ajoutée dans un réservoir contenant la composition d'encollage et le mélange obtenu est brassé jusqu'à une répartition homogène des gouttelettes d'huile.

13. Procédé selon l'une quelconque des revendications précédentes, **caractérisé par le fait que** la quantité d'huile minérale appliquée sur les fibres de laine minérale est comprise entre 0,2 et 1,0 %, en particulier entre 0,3 et 0,8 %, rapporté au poids des fibres minérales.

14. Procédé selon l'une des revendications précédentes, **caractérisée par le fait que** le sucre hydrogéné est choisi parmi les produits d'hydrogénation des monosaccharides, disaccharides, oligosaccharides et polysaccharides et les mélanges de ceux-ci.

15. Procédé selon l'une quelconque des revendications précédentes, **caractérisé par le fait que** le sucre hydrogéné est un produit d'hydrogénation d'un hydrolysat d'amidon.

**Patentansprüche**

1. Verfahren zum Herstellen von Dämmprodukten auf Basis von Mineralwolle, umfassend

- Aufbringen, auf Mineralwollefasern, einer Bindemittelzusammensetzung, enthaltend

(a) mindestens ein Kohlenhydrat, das aus reduzierenden Zuckern, nicht reduzierenden Zuckern, hydrierten Zuckern und einer Mischung davon ausgewählt ist,

(b) mindestens ein Vernetzungsmittel des oder der Kohlenhydrate,

- Verdampfen der Lösungsmittelphase der Bindemittelzusammensetzung und
- thermisches Härten des nichtflüchtigen Anteils der Zusammensetzung,

wobei das Verfahren **dadurch gekennzeichnet ist, dass** der Bindemittelzusammensetzung, vorzugsweise unmittelbar vor dem Aufbringen von dieser auf die Mineralwollefasern, eine Öl-in-Wasser-Emulsion hinzugefügt wird, umfassend Wasser, 30 bis 70 Gewichts-% eines Mineralöls, 0,5 bis 5,0 Gewichtsteile pro 100 Gewichtsteile Mineralöl mindestens eines nichtionischen Tensids und 0,1 bis 2,0 Gewichtsteile pro 100 Gewichtsteile Mineralöl einer wasserlöslichen Polyose, wobei der durch Laserbeugungsgranulometrie bestimmte mittlere Durchmesser der Öltröpfchen der Öl-in-Wasser-Emulsion, zwischen 5,1 $\mu$m und 150 $\mu$m liegt und die Menge an Mineralöl, die auf die Mineralwollefasern aufgebracht wird, bezogen auf das Gewicht der Mineralfasern zwischen 0,1 und 2,0 % liegt.

**2.** Verfahren nach Anspruch 1, **dadurch gekennzeichnet, dass** das Vernetzungsmittel aus Polycarbonsäuren, Salzen und Anhydriden von Polycarbonsäuren, Metallsalzen von Mineralsäuren und Amin- und Ammoniumsalzen von Mineralsäuren ausgewählt ist.

**3.** Verfahren nach Anspruch 2, **dadurch gekennzeichnet, dass** das Vernetzungsmittel aus Polycarbonsäuren, vorzugsweise monomeren Polycarbonsäuren, ausgewählt ist.

**4.** Verfahren nach einem der vorstehenden Ansprüche,
**dadurch gekennzeichnet, dass** der Gehalt an hydrierten Zuckern in dem Kohlenhydrat zwischen 25 Gewichts-% und 100 Gewichts-% liegt, vorzugsweise mindestens 30 Gewichts-%, insbesondere mindestens 50 Gewichts-% und noch mehr bevorzugt mindestens 70 Gewichts-% hydrierte Zucker beträgt.

**5.** Verfahren nach einem der vorstehenden Ansprüche,
**dadurch gekennzeichnet, dass** die Bindemittelzusammensetzung bezogen auf 100 Gewichtsteile der Bestandteile (a) + (b) ferner 0,1 bis 3 Gewichtsteile Polyorganosiloxan, vorzugsweise Polydimethylsiloxan (PDMS) umfasst.

**6.** Verfahren nach Anspruch 5, **dadurch gekennzeichnet, dass** das Polyorganosiloxan Funktionen trägt, die in der Lage sind, mit den Bestandteilen (a) oder (b) der Bindemittelzusammensetzung zu reagieren.

**7.** Verfahren nach einem der vorstehenden Ansprüche,
**dadurch gekennzeichnet, dass** das Mineralöl bei 20 °C eine kinematische Viskosität zwischen 100 und 6000 mm$^2$/s, vorzugsweise zwischen 1000 und 5000 mm$^2$/s aufweist.

**8.** Verfahren nach einem der vorstehenden Ansprüche,
**dadurch gekennzeichnet, dass** der mittlere Durchmesser der Öltröpfchen zwischen 6,0 $\mu$m und 100 $\mu$m, bevorzugt zwischen 6,5 und 60 $\mu$m, mehr bevorzugt zwischen 7 und 40 $\mu$m, insbesondere zwischen 8 und 35 $\mu$m und idealerweise 10 und 30 $\mu$m liegt.

**9.** Verfahren nach einem der vorstehenden Ansprüche,
**dadurch gekennzeichnet, dass** die Öl-in-Wasser-Emulsion 0,5 bis 1 Gewichtsteile wasserlösliche Polyose pro 100 Gewichtsteile Mineralöl umfasst.

**10.** Verfahren nach einem der vorstehenden Ansprüche,
**dadurch gekennzeichnet, dass** die Öl-in-Wasser-Emulsion 1,2 bis 3 Gewichtsteile nichtionisches Tensid pro 100 Gewichtsteile Mineralöl umfasst.

**11.** Verfahren nach einem der vorstehenden Ansprüche,
**dadurch gekennzeichnet, dass** das Aufbringen der Bindemittelzusammensetzung auf die Mineralfasern mittels eines Sprühkranzes, der eine Vielzahl von Düsen beinhaltet, erfolgt, und dadurch, dass die Öl-in-Wasser-Emulsion durch Einspritzen eines Stroms der Öl-in-Wasser-Emulsion in den Strom der Bindemittelzusammensetzung, der den Sprühkranz speist, in die Bindemittelzusammensetzung eingebracht wird.

**12.** Verfahren nach einem der Ansprüche 1 bis 10,
**dadurch gekennzeichnet, dass** die Öl-in-Wasser-Emulsion in einen Behälter hinzugefügt wird, der die Bindemittelzusammensetzung enthält, und die erhaltene Mischung bis zu einer homogenen Verteilung der Öltröpfchen gerührt wird.

**13.** Verfahren nach einem der vorstehenden Ansprüche, **dadurch gekennzeichnet, dass** die Mineralölmenge, die auf die Mineralwollefasern aufgebracht wird, bezogen auf das Gewicht der Mineralfasern zwischen 0,2 und 1,0 %, insbesondere zwischen 0,3 und 0,8 % liegt.

**14.** Verfahren nach einem der vorstehenden Ansprüche, **dadurch gekennzeichnet, dass** der hydrierte Zucker aus den Hydrierungsprodukten von Monosacchariden, Disacchariden, Oligosacchariden und Polysacchariden und den Mischungen davon ausgewählt ist.

**15.** Verfahren nach einem der vorstehenden Ansprüche, **dadurch gekennzeichnet, dass** der hydrierte Zucker ein Hydrierungsprodukt eines Stärkehydrolysats ist.

**Claims**

**1.** A process for manufacturing insulating products based on mineral wool, comprising

- the application, on mineral wool fibers, of a binder composition containing

(a) at least one carbohydrate selected from reducing sugars, nonreducing sugars, hydrogenated sugars and a mixture thereof,
(b) at least one crosslinking agent for crosslinking the carbohydrate(s),

- the evaporation of the solvent phase of the binder composition and
- the thermal curing of the non-volatile fraction of the binder composition, said process being **characterized in that**, added to the binder composition, preferably immediately before the application thereof on the mineral wool fibers, is an oil-in-water emulsion comprising water, from 30 to 70 % by weight of a mineral oil, from 0.5 to 5.0 parts by weight per 100 parts by weight of mineral oil of at least one nonionic surfactant and from 0.1 to 2.0 parts by weight per 100 parts by weight of mineral oil of a water-soluble polyoside, the mean diameter of the oil droplets of the oil-in-water emulsion, determined by laser diffraction particle size analysis, being comprised between 5.1 $\mu$m and 150 $\mu$m and the amount of mineral oil applied to the mineral wool fibers being comprised between 0.1 and 2.0 % with respect to the weight of the mineral fibers..

**2.** The process as claimed in claim 1, **characterized in that** the crosslinking agent is selected from polycarboxylic acids, salts and anhydrides of polycarboxylic acids, metal salts of mineral acids and the amine and ammonium salts of mineral acids.

**3.** The process as claimed in claim 2, **characterized in that** the crosslinking agent is selected from polycarboxylic acids, preferably from monomeric polycarboxylic acids.

**4.** The process as claimed in any one of the preceding claims, **characterized in that** the proportion of hydrogenated sugars in the carbohydrate is between 25% and 100% by weight, preferably at least 30% by weight, in particular at least 50% by weight and more preferentially at least 70% by weight of hydrogenated sugars.

**5.** The process as claimed in any one of the preceding claims, **characterized in that** the binder composition further comprises from 0.1 to 3 parts by weight of polyorganosiloxane, preferably of polydimethylsiloxane (PDMS), relative to 100 parts by weight of constituents (a) + (b).

**6.** The process as claimed in claim 5, **characterized in that** the polyorganosiloxane bears functions capable of reacting with the constituents (a) or (b) of the binding composition.

**7.** The process as claimed in any one of the preceding claims, **characterized in that** the mineral oil has a kinematic viscosity at 20°C of between 100 and 6000 mm$^2$/s, preferably of between 1000 and 5000 mm$^2$/s.

**8.** The process as claimed in any one of the preceding claims, **characterized in that** the mean diameter of the mineral oil droplets is comprised between 6.0 $\mu$m and 100 $\mu$m, preferably between 6.5 and 60 $\mu$m, more preferably between 7 and 40 $\mu$m, in particular between 8 and 35 $\mu$m, and ideally 10 and 30 $\mu$m.

9. The process as claimed in any one of the preceding claims, **characterized in that** the oil-in-water emulsion comprises from 0.5 to 1 part by weight of water-soluble polyoside per 100 parts by weight of mineral oil.

10. The process as claimed in any one of the preceding claims, **characterized in that** the oil-in-water emulsion comprises from 1.2 to 3 parts by weight of nonionic surfactant per 100 parts by weight of mineral oil.

11. The process as claimed in any one of the preceding claims, **characterized in that** the application of the binder composition to the mineral fibers is carried out by means of a spraying ring comprising a plurality of nozzles, and **in that** the oil-in-water emulsion is introduced into the binding composition by injecting a flow of oil-in-water emulsion into the flow of binding composition feeding the spraying ring.

12. The process as claimed in any one of claims 1 to 10, **characterized in that** the oil-in-water emulsion is added to a tank containing the binder composition and the mixture obtained is mixed until there is a uniform distribution of the oil droplets.

13. The process as claimed in any one of the preceding claims, **characterized in that** the amount of mineral oil applied to the mineral wool fibers is between 0.2 and 1.0%, in particular between 0.3 and 0.8%, relative to the weight of the mineral fibers.

14. The process as claimed in any one of the preceding claims, **characterized in that** the hydrogenated sugar is selected from the hydrogenation products of monosaccharides, disaccharides, oligosaccharides and polysaccharides and mixtures thereof.

15. The process as claimed in any one of the preceding claims, **characterized in that** the hydrogenated sugar is a hydrogenation product of a starch hydrolyzate.

## RÉFÉRENCES CITÉES DANS LA DESCRIPTION

**Documents brevets cités dans la description**

- US 8197587 B
- US 20110223364 A
- WO 2015132518 A
- WO 2015181458 A
- WO 2012118939 A
- WO 2010029266 A
- WO 2013014399 A
- WO 2012168619 A
- WO 2012168621 A
- WO 2012072938 A